# EUROPEAN PATENT SPECIFICATION

(11) **EP 0 643 892 B1**
(45) Date of publication and mention of the grant of the patent: **01.03.2000**
(21) Application number: 93910056.6
(22) Date of filing: 27.05.1993
(51) Int. Cl.: H04L 12/40, H04Q 9/00, G08C 15/00

(54) **A DATA TRANSFER METHOD FOR AN ACTUATOR SYSTEM OPERATING IN AN ENVIRONMENT SUBJECTED TO INTERFERENCES**
DATENÜBERTRAGUNGSSYSTEM FÜR EIN STELLSYSTEM IN EINER VON STÖRUNGEN BEEINFLUSSTEN UMGEBUNG
PROCEDE DE TRANSFERT DE DONNEES POUR UN SYSTEME D'ACTIONNEMENT FONCTIONNANT DANS UN ENVIRONNEMENT AVEC DES RISQUES DE PERTURBATIONS

(30) Priority: 27.05.1992 FI 922450
(43) Date of publication of application: 22.03.1995
(73) Proprietor: ABB Control OY, 65101 Vaasa (FI)
(72) Inventor: SUUTARI, Jukka, FIN-33840 Tampere (FI); SOLANTI, Petri, FIN-65350 Vaasa (FI); RITONIEMI, Erkki, FIN-33720 Tampere (FI); PAULASAARI, Virpi, FIN-33720 Tampere (FI)
(74) Representative: Orès, Bernard
(86) International application number: FI9300227
(87) International publication number: WO9325028

(56) References cited:
- WO-A-89/08958
- US-A- 4 964 076
- ATZ Automobiltechnische Zeitschrift, Volume 94, No. 2, 1992, SIEGFRIED DAIS and JAN UNRUH, "Technisches Konzept des seriellen Bussystems CAN - Teil 1", page 66 - page 77.

## Description

The object of the invention is a data transfer method according to the preamble of claim 1 for an actuator system operating in an environment subjected to interferences.

In industrial establishments data transfer is traditionally implemented by using different bus structures for masses of data of various sizes. For surveillance of delivery of goods and for business administration one makes use of a fast data transfer bus, which transfers data in large blocks by using a complicated data transfer structure to verify correctness of transferred data. Since data is transferred in large blocks, data transfer rate in bytes per second is high, but for data transfer needed for real-time process control containing less data this bus structure is disadvantageous, as fast dispatching of a short message on such a bus is difficult. Nor is such a bus designed for demanding process conditions.

Below the main bus there is often built a process bus through which the process stations communicate with each other. The bus is able for fast data transfer, but conducting this bus to individual electromechanical actuators is not economically feasible. Nor is this bus designed for often extremely interfering process conditions.

The I²C bus of Philips® can be used for control of actuators in process applications. In this solution the clock pulse is not all the time on. The length of the data block varies always according to data contents, and the data block always contains the address of a slave unit. In this bus solution the slowest actuators may slow down the data transfer rate. This solution is originally designed for internal data transfer of a device, and hence the data structure does not optimally apply to an interfering process environment. Because of changing block length, among other things, this bus solution is subject to interference, and when slow process devices are connected to a network the speed of the system is not sufficient in all conditions. The data transfer format also causes limitations for data transfer rate.

The document WO-A-89 08958 discloses a system for transferring primary information between a plurality of transmitters and receivers connected to a common communication line, but no measures are disclosed to use this system in extremely interfering process conditions.

It is the purpose of this invention to eliminate the deficiencies of the techniques described above and to provide a data transfer method of quite a novel type for an actuator system operating in an environment subjected to interferences.

The invention is based on that a basic unit forms on the bus a continuous clock signal of essentially constant frequency, the basic unit maintains a data register containing the memory locations for storing data, information used in communication is divided into blocks of constant length containing the address data of the register of the basic unit and a data item, each bit to be sent is duplicated and the actuator recognizes an information block on the basis of its data register address.

More specifically, characteristic to the method according to the invention is what is set forth in the characterizing part of claim 1.

With the invention considerable advantages are attained.

The data transfer method according to the invention is fast and tolerates external interference very well.

In the following the invention will be further discussed with the aid of examples of embodiments according to the accompanying drawings.
Fig. 1 illustrates in block diagram form an environment where the invention is applicable.
Fig. 2 illustrates a part of the block diagram of Fig. 1 in more detail.
Fig. 3 illustrates an electrical circuitry which is applicable in the method according to the invention.
Fig. 4 illustrates in table form the structure of the data transfer block in the method according to the invention.
Fig. 5 illustrates in table form a register structure according to the invention.
Fig. 6 illustrates in block diagram form a protocol circuit according to the invention.
Fig. 7 illustrates the timing structure of the data transfer block structure according to Fig. 4.

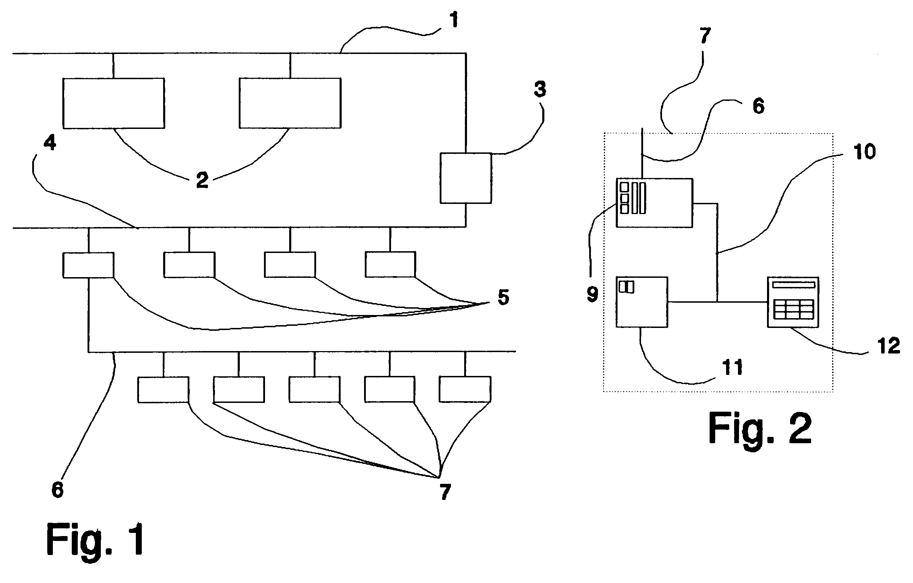

According to Fig. 1 a data transfer bus structure within an industrial establishment is typically formed, for example, of four bus levels:
a) A Factory bus 1, to which several powerful data processing units are connected, such as a process computer 3 and, in parallel, other data processing units 2, which may comprise other computers, data transfer equipment for external networks etc.
b) A process bus 4 located hierarchically below the factory bus, to which the process stations 5 are connected.
c) A field bus 6 located below the process bus 4, to which the actuators 7 with their peripheral devices are connected.
d) A device bus 10 located below the field bus 6, to be further discussed in conjunction of Fig. 2.

One may, in general, say about the bus hierarchy that the higher one goes in the bus hierarchy (for instance factory bus 1) the higher is the total data transfer rate. Because in such a bus data is transferred in large blocks, the transfer rate of an individual data item is a statistical quantity. This may cause problems in high-speed applications.

On the lowest bus level (device bus 10), on the contrary, data transfer rate is low, but on basis of a lighter data format an individual data item can be rapidly delivered to the desired destination.

According to Fig. 2 the actuator block 7 comprises an intelligent actuator 9, a peripheral device 11 connected thereto by way of the device bus, and a monitoring/control unit 12 connected by way of the same bus.

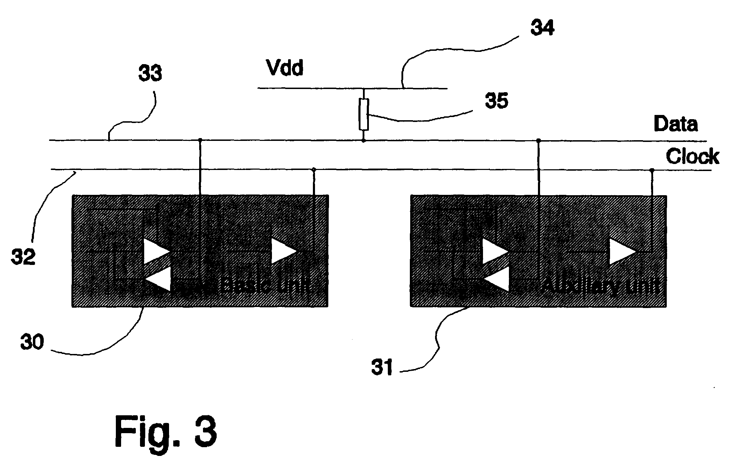

According to Fig. 3 the bus structure is physically formed of one basic unit 30 and one or more auxiliary units 31 connected thereto. The basic unit 30 all the time transmits on the clock bus 32 a clock signal to be received by the auxiliary unit 31. Both the basic unit 30 and the auxiliary units 31 transmit data blocks of fixed length on a data line 33. The bus comprises four signals. So far as data transfer is concerned, the most essential signals are the clock and data signals already mentioned. In addition to the clock 32 and the data lines 33 also the auxiliary voltage 34 and reference ground (not shown) are conducted from the basic unit 30 to the slave units 31. In the signal levels of the bus, 0 V corresponds to logic "zero" and 5 V to logic "one". In the basic unit, the data line 33 is connected through a 2 kilo-ohm resistor to the supply voltage Vdd, which together with the circuit outputs of open-drain type it forms a wired-AND function on the data line 33.

The largest allowable capacitance of the bus is 400 pF including the cable, connectors, and the pins of the circuits. The largest allowable capacitance limits the cable length to two meters. The clock frequency on the bus is 64 kHz. As a physical transfer path a shielded cable comprising three twisted pairs is used. In each pair one connector is connected to the signal ground. The cable sheath is also at the ground potential. The number of units connected to the bus is only limited by the largest allowable capacitance.

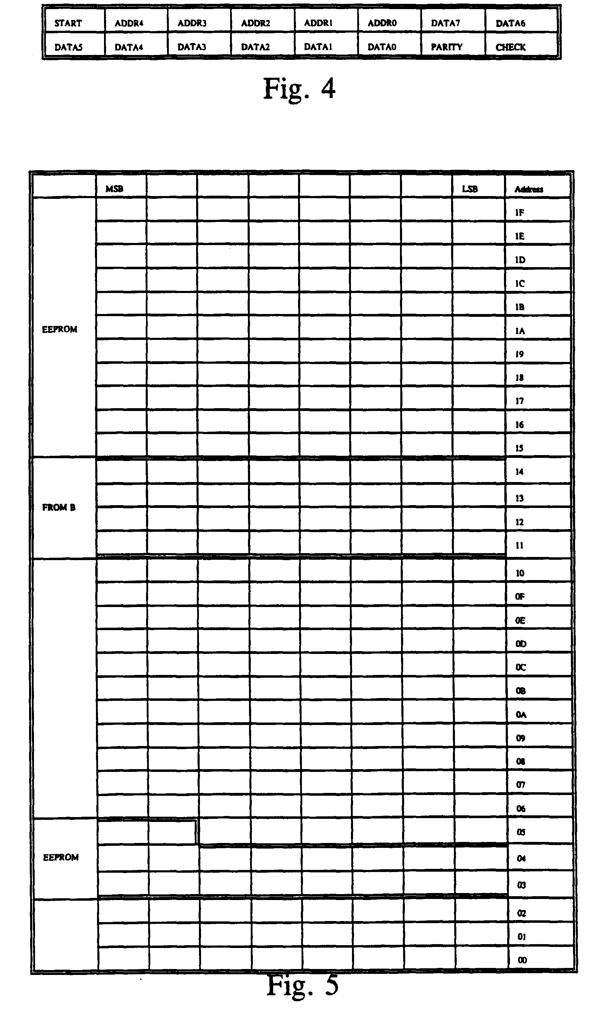

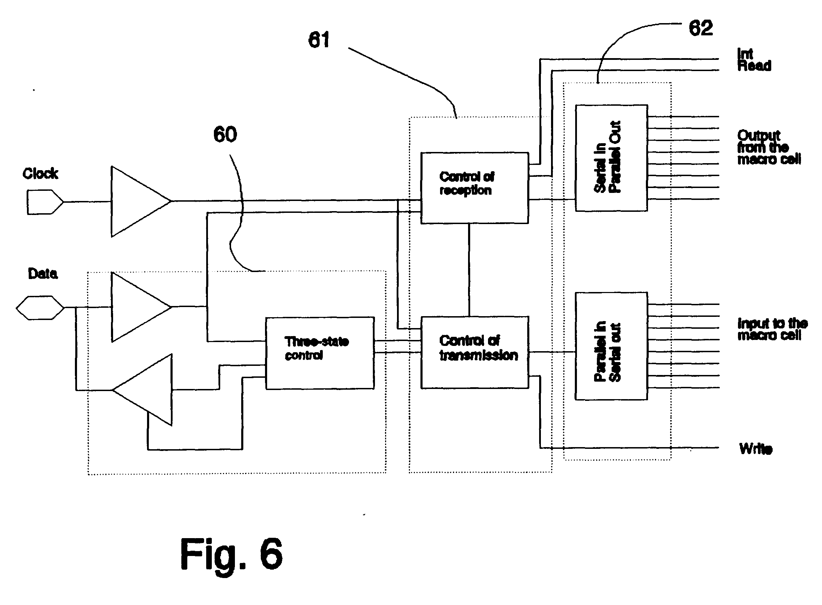

The bus protocol is described in the following with reference to the blocks of Fig. 3 and the tables of Figs. 4 and 5. Bus control is arbitrating bit-by-bit. The basic unit 30 in Fig. 3 generates on the clock line 32 a clock of 64 kHz with which other units 31 on the bus 32 are synchronized. All the units 31 and 30 on the bus can operate both as transmitters and receivers. Separate units do not have addresses of their own, but an address refers to a given data block in the data register of the basic unit 30. The structure of the data register is illustrated in Fig. 5. The address mentioned is the rightmost column in the table. In this table an address is shown in hexadecimal format. Consequently, information transferred in the system is divided into 32x8 data register bytes, each having its own address. Information is transferred on the bus one byte at a time. The basic unit 30 comprises a complete data register, whereas an auxiliary unit 31 may only contain bytes required by it.

The data register of Fig. 5 is divided according to its addresses into different areas always according to whether the actuators are allowed to write data into these addresses. In the figure the second column from the left represents the most significant data bit, and the second column from the right the least significant bit.

The basic unit 30 all the time transmits the bytes of the register space shown in Fig. 5 from the highest byte down in the address space on the data line 33. When an auxiliary unit 31 transmits a byte, it starts transmission at the same time with the basic unit 30, and if the message has a higher priority the transmission is successful. If the message was not delivered to the destination, the auxiliary unit 31 will retry.

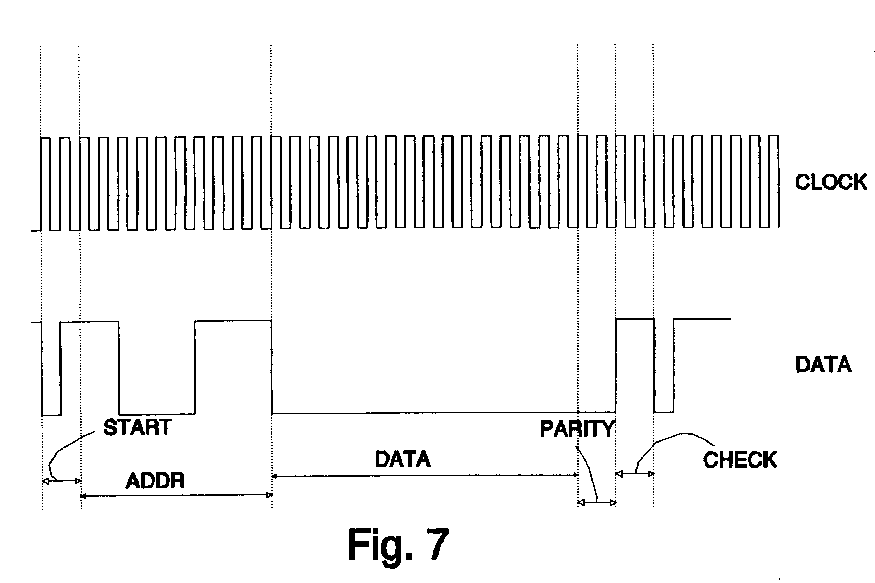

According to Figs. 4 and 7 a message frame is started by a start character START. It is followed by a five-bit address ADDR4 - ADDR0, an eight-bit data DATA7 - DATA0, a parity PARITY, and an acknowledge CHECK. New transmission is started immediately after the message is terminated. Each bit to be sent is duplicated, hence transmitting one bit takes the time of two clock periods. Within the message the succeeding readings of one bit should, consequently, always produce the same result. In this way one is able to detect on the line possible interference, which may change the state of the line, and one is able to prevent acknowledgement of a distorted message. The same purpose is served by the use of the parity bit. In the bus according to the invention, odd parity is used.

The start character START differs from other characters in that it does not stay the same during the two clock periods but changes its state from "zero" to "one" after the first clock period. As the parity bit odd parity is sent. Hence, if there are, for example, contact problems on the data line 33, or the line is otherwise in contact with ground, but an individual interference draws the line momentarily up, which would be interpreted as a start bit, the message does not pass the parity checking.

In the protocol, negative acknowledgement is used, this means that if data is received with no errors, the receivers 31 do not react in any way, but the data line remains to be up. But if the receiver detects that a half-character has been changed, or parity does not match, the receiver draws the line down during the acknowledgement. Then the transmitter knows that the message has to be retransmitted. The basic unit tries retransmitting at the most four times, after which it begins to transmit the next block. Due to the negative acknowledgement the protocol functions even if there were no auxiliary units on the bus.

Since on the bus there are typically several transmitters of which one is transmitting all the time, collision of messages can not be prevented. In this situation one requires a system wherewith possession of the bus can be determined. In the invention the problem is solved so that a logic "zero" in the message outweighs "one", so when several units are transmitting simultaneously, right to transmit is won by the one that has more "zeros" in the beginning of its message. When a device finds that is has lost possession of the line, it terminates its transmission and remains as a receiver. In this way the data blocks become prioritized so that in binary form the block in the lowest address has the highest priority.

This prioritization of addresses, on the other hand, causes that in the Table of Fig. 5 the most important data, so far as the equipment and process are concerned, is disposed in the lowest memory location. Hence, data blocks are divided according to their functions so that data coming from the auxiliary units resides in the lowest addresses. In this way the auxiliary units are able to get their message delivered within reasonable time. If an auxiliary unit when transmitting finds out that it has lost possession of the bus, it will retry transmission 15 times. Up to this time the basic unit 30 has reached to go through all the data blocks of higher priorities, and the auxiliary unit takes possession of the bus.

If two units are updating the same data byte, the latest update is valid as a main rule. The rule may be overruled by the so called lock bits in the lowest byte, whereby one may inhibit updating of transmissions of the auxiliary units in the registers of the basic unit. An auxiliary unit detects the lock bits and does not at all try to transmit data to the inhibited bytes.

The logic of the bus protocol circuit comprises, according to Fig. 6, three main blocks: an external logic 60 controlling the open-drain output, a state machine 61 controlling transmission and reception, and serial to parallel and parallel to serial converters 62 towards inside of the auxiliary unit.

The serial to parallel converter 62 is implemented by a shift register structure. Similarly, in the parallel to serial converter a shift register is used. Communication towards the microprocessor taking care of the internal functions of the auxiliary unit is conducted through the normal address and data buses of the processor. For controlling the communication both an interrupt line and write and read signals are required. Data intended to be sent from the processor to the bus must first be buffered within the protocol circuit to wait for its turn to be sent and for the parallel to serial conversion. Internal control structures within the I/O circuit serve for buffering of data going from the bus towards the processor.

The control logic 60 of the open-drain output has the smallest number of gates. In it, by three-state control of a pin, an output is driven to three-state always except when the circuit is transmitting a logic "zero" on the line.

The state machine 61 with its control signals is the most complicated of the structures. The state machine 61 has two separate control sequences, reception and transmission. The operation starts with synchronization with data communication transmitted by the basic unit. Since the basic unit, according to the protocol, is all the time transmitting data on the bus, the auxiliary units can be synchronized with the signal of the basic unit. The protocol circuit of an auxiliary unit recognizes the start character of transmission, whereafter the reception logic is activated. During reception it is monitored that both readings of the same bit are equivalent, but if an error situation is detected, to mark rejection of reception, a signal indicating this situation is set active. The same signal is also affected by the parity checking logic. If the parity received is different from what was calculated, reception is rejected. Rejection of reception means that no interrupt for read operation is given to the processor within the auxiliary unit. If after termination of reception the signal indicating rejection is active, information about it is also given to the transmitter by driving the open-drain output to zero state.

When write command comes from the processor within an auxiliary unit, the signal indicating need for transmission is set active. The signal remains active until transmission is succesful or information about reaching the maximum number of retries comes from the retrial counter. Transmission is started immediately after termination of ongoing reception. The protocol circuit also receives its own transmission, but it is not re-updated within the circuit. When transmitting one carries out with a shift register a parallel to serial conversion, and data is reduplicated by using the operating frequency divided by two as the clock signal of the shift register. A comparator all the time monitors that the bus actually has the state what is tried to be sent thereon. If any other is transmitting a message at a higher priority, the transmission signal is reset, and reception is started. Transmission is retried immediately at the next possibility to start. When the whole message has been sent, one still listens if all have received the message without errors. If so, the signal that indicates need for transmission is acknowledged. Otherwise, if the data line is drawn down during the acknowledgement bit, new attempt to transmit is started immediately.

The state machine 61 is implemented by means of two 32-bit down counters. One counts receptions, the other transmissions. When starting either reception or transmission the number 29 is loaded into the counter in question, and operation of the counter is enabled. At any time the count in the counter indicates the current state. The states causing operations are fetched by basic gates, and control signals are given according to them. The transmission counter is reset, if the turn to transmit is lost. The transmission retrial counter is a four-bit up counter with reset and chip enable lines. When the transmission retrial counter reaches the value 15, the signal indicating need for transmission is reset.

## Claims

1. A data transfer method for an actuator system operating in an environment subjected to interferences, said method comprising a step of
- communicating by a basic unit (30) with at least one auxiliary unit (31) through a bus (33,32),
and characterized in that the method further comprises the following steps :
- forming on the bus (32) by the basic unit (30) a continuous clock signal of essentially constant frequency,
- maintaining by the basic unit (30) a data register, which comprises the memory locations for storing data,
- dividing the information used in communication into blocks of fixed length containing the address data (ADDR) of the register of the basic unit (30) and a data item (DATA),
- duplicating each bit to be sent, and
- recognizing by the basic unit (30,31) an information block on the basis of its data register address (ADDR).

2. The method according to claim 1, characterized in that the information block is formed of a start character (START), a five-bit data register address (ADDR0,ADDR4), an eight-bit data (DATA0-DATA7), a parity (PARITY), and an acknowledgement (CHECK).

3. The method according to claim 2, characterized in that the state of the start character (START) is changed from zero to one during the first clock period.

## Patentansprüche

1. Datenübertragungsverfahren für ein in einer Störungen ausgesetzten Umgebung arbeitendes Stellsystem,
wobei das Verfahren einen Schritt aufweist,
mittels einer Grundeinheit (30) durch einen Bus (33, 32) hindurch mit zumindest einer Hilfseinheit (31) zu kommunizieren,
und dadurch gekennzeichnet ist, dass das Verfahren weiter die folgenden Schritte aufweist:
Ausbilden eines permanenten Taktsignals mit einer im wesentlichen konstanten Frequenz auf dem Bus (32) mittels der Grundeinheit (30),
Verwalten eines Datenregisters, welches Speicherplätze zum Abspeichern von Daten aufweist, mittels der Grundeinheit (30),
Einteilen der beim Kommunizieren verwendeten Information in Blöcke fester Länge, die die Adressdaten (ADR) des Registers der Grundeinheit (30) und ein Datenelement (DATUM) aufweisen,
Duplizieren eines jeden zu sendenden Bits, und
Erkennen eines Informationsblock auf Grundlage seiner Adresse (ADR) im Datenregister mittels der Grundeinheit (30, 31).

2. Verfahren nach Anspruch 1, dadurch gekennzeichnet, dass der Informationsblock aus einem Startzeichen (START), einer Fünf-Bit-Adresse (ADR0-ADR4) im Datenregister, einem Acht-Bit-Datum (DATUM0-DATUM7), einer Parität (PARITÄT) und einer Quittung (KONTROLLE) gebildet ist.

3. Verfahren nach Anspruch 2, dadurch gekennzeichnet, dass der Zustand des Startzeichens (START) während der ersten Taktperiode von Null zu Eins geändert wird.

## Revendications

1. Procédé de transfert de données pour un système d'actionneurs fonctionnant dans un environnement sujet à des interférences, ledit procédé comprenant une étape de
communication par une unité de base (30) avec au moins une unité auxiliaire (31) par l'intermédiaire d'un bus (33,32),
et caractérisé en ce que le procédé comprend en outre les étapes suivantes :
génération sur le bus (32), par l'unité de base (30), d'un signal d'horloge continu de fréquence essentiellement constante,
maintien, par l'unité de base (30), d'un registre de données qui comprend les emplacements de mémoire pour le stockage de données,
division des informations utilisées dans la communication en blocs de longueur fixe contenant les données d'adresse (ADDR) du registre de l'unité de base (30) et un article de données (DATA),
duplication de chaque bit à envoyer, et
reconnaissance, par l'unité de base (30,31), d'un bloc d'information sur la base de son adresse de registre de données (ADDR) .

2. Procédé selon la revendication 1, caractérisé en ce que le bloc d'information est constitué d'un caractère de départ (START), d'une adresse de registre de données de cinq bits (ADDR0 - ADDR4), de données de huit bits (DATA0-DATA7), d'une parité (PARITY) et d'un accusé de réception (CHECK).

3. Procédé selon la revendication 2, caractérisé en ce que l'état du caractère de départ (START) est changé de zéro à un pendant la première période d'horloge.
